# EUROPÄISCHE PATENTSCHRIFT

(11) **EP 3 427 987 B1**
(45) Veröffentlichungstag und Bekanntmachung des Hinweises auf die Patenterteilung: **10.11.2021**
(21) Anmeldenummer: 18187293.8
(22) Anmeldetag: 22.03.2016
(51) Int. Cl.: B60K 7/00, B60K 17/04

(54) **FAHRANTRIEB FÜR EIN ELEKTRISCH ANGETRIEBENES FAHRZEUG**
DRIVE FOR AN ELECTRIC VEHICLE
ENTRAÎNEMENT POUR UN VÉHICULE ENTRAÎNÉ ÉLECTRIQUEMENT

(30) Priorität: 31.03.2015 DE 102015104989
(43) Veröffentlichungstag der Anmeldung: 16.01.2019
(62) Teilanmeldung aus: 16161678.4
(73) Patentinhaber: Dipl.-Ingenieure Rainer & Oliver PULS GmbH, 76185 Karlsruhe (DE)
(72) Erfinder: Puls, Oliver, 76227 Karlsruhe (DE); Puls, Rainer, 76227 Karlsruhe (DE); Hilligardt, Andreas, 67117 Limburgerhof (DE); Kühn, Stephan, 85055 Ingolstadt (DE)
(74) Vertreter: Ullrich & Naumann PartG mbB

(56) Entgegenhaltungen:
- WO-A2-94/26551
- DE-A1-102010 007 066
- DE-A1-102010 020 576
- FR-A1- 2 680 733
- US-A1- 2006 225 930

## Beschreibung

Die Erfindung betrifft einen Fahrantrieb für ein elektrisch angetriebenes Fahrzeug, mit auf einer gemeinsamen Achslinie angeordneten linken und rechten Fahrzeugrädern und mit für das linke und das rechte Fahrzeugrad getrennten Antriebseinheiten, wobei jede Antriebseinheit
- über eine mit mindestens einem Kardanelement versehene Gelenkwelle mit der Radnabe des jeweiligen Fahrzeugrades verbunden ist,
- auf einer gemeinsamen Achse zumindest einen Elektromotor, ein Getriebe und ein Abtriebselement zur Verbindung mit der Gelenkwelle umfasst.

Aus der DE 202 01 379 U1 und der WO 2012/139567 A2 sind elektrische Fahrantriebe mit zwei koaxial auf einer gemeinsamen Achse angeordneten zwei Motoren und Getrieben bekannt, wobei jedes Rad des Fahrzeugs über einen eigenen Motor mit Getriebe angetrieben ist. Eine solche Bauweise ermöglicht einen relativ kompakten elektrischen Fahrantrieb, bei dem die Zahl der Bauteile gering ist und Gewichts- und Wirkungsgradnachteile vermieden werden. FR2680733 beschreibt eine hintere Antriebsachse für ein Hybridfahrzeug mit elektrischen Mitteln zum Antrieb der Räder. Die Achse besteht aus einer horizontalen Platte, die durch elastische Mittel mit der Karosserie des Fahrzeugs verbunden ist und an der zwei Elektromotoren befestigt sind, die jeweils eines der Räder antreiben können und deren Achsen in Bezug auf die Achse der Räder geneigt sind und bei Nennlast im Wesentlichen in derselben horizontalen Ebene liegen.

Obwohl die bekannten Fahrantriebe relativ kompakt bauen, ist die Bauweise nicht für alle Einsatzgebiete optimal. Für Zwecke des Automobilrennsports zum Beispiel ist nicht nur konzeptioneller Leichtbau bedeutsam, d. h. ein besseres Leistungsgewicht, sondern gefordert sind auch geringe Trägheiten im Hinblick auf das Problem des Rollens oder Gierens des Fahrzeugs. Wichtig bei einem Rennsportfahrzeug ist auch ein niedrig liegender Schwerpunkt. Ein niedriger Schwerpunkt ist dann erzielbar, wenn die besonders schweren Komponenten des Fahrzeugs soweit als möglich in dessen Zentrum, längs der Fahrzeugmittellinie sowie möglichst weit unten platziert werden.

Der Erfindung liegt die **Aufgabe** zugrunde, einen für elektrisch angetriebene Fahrzeuge und vor allem für im Motorsport einsetzbare Fahrzeuge geeigneten Fahrantrieb zu schaffen, wobei das besondere Augenmerk der optimierten Gewichtsverteilung innerhalb des Fahrzeugs gilt.

Zur Lösung dieser Aufgabe wird ein Fahrantrieb gemäss Anspruch 1 vorgeschlagen.

Durch die Anordnung der Antriebseinheiten hintereinander wird es möglich, jede der beiden Antriebseinheiten nahe der Fahrzeugmittellinie oder sogar auf der Fahrzeugmittellinie anzuordnen, so dass auch die Gewichtsverteilung innerhalb des Fahrzeugs stark entlang dessen Mittelachse konzentriert ist. Das Fahrverhalten, vor allem bei hohen Kurvenbeschleunigungen, wird dadurch verbessert und die Rollneigung des Fahrzeugs wird auf ein Minimum reduziert.

Die Anordnung der beiden Antriebseinheiten in Fahrzeuglängsrichtung hintereinander gelingt nur bei einem gewissen Vor- und Rückversatz der Antriebseinheiten relativ zu der Achslinie der beiden Fahrzeugräder. Dieser Versatz ist allerdings nicht groß und fällt, insbesondere bei Kombination mit geeigneten Gelenkwellen und Kardangelenken, nicht sehr ins Gewicht. Durch eine leichte Schrägstellung der beiden Antriebseinheiten, bei der diese unter einem horizontalen Winkel zur Fahrzeugquerrichtung angeordnet sind, lassen sich die Verluste in den Kardangelenken soweit reduzieren, dass sie keine nennenswerte praktische Bedeutung haben.

Weitere Ausgestaltungen des elektrischen Fahrantriebs werden in den Ansprüchen 2-7 vorgeschlagen.

Mit einer weiteren Ausgestaltung des elektrischen Fahrantriebs wird vorgeschlagen, dass die Achsen der Antriebseinheiten gegenüber der Horizontalen geneigt angeordnet sind, wobei das gelenkwellenseitige Ende der Antriebseinheit jeweils das höher liegende Ende ist. Eine solche Anordnung der Antriebseinheiten schafft die Voraussetzung dafür, die Antriebseinheiten sehr weit unten im Fahrzeug anzuordnen, d. h. in nur geringer Höhe über dem Fahruntergrund. Eine solche tiefe Anordnung ist bei Fahrzeugen für den Motorsport in der Regel unproblematisch, da diese Fahrzeuge ohnehin einen geringen vertikalen Federweg haben, und daher keine Gefahr der Kollision der Antriebseinheiten mit dem Fahruntergrund besteht.

Andererseits können die Antriebseinheiten auch in der Weise gegenüber der Horizontalen geneigt angeordnet sein, dass die beiden Fahrantriebe weit oben im Fahrzeug angeordnet sind. Dies kann dann vorteilhaft sein, wenn, etwa für Sonderfahrzeuge, eine erhöhte Bodenfreiheit gefordert ist.

Eine weitere Ausgestaltung des Fahrantriebs ist, für jede Antriebseinheit, durch eine außerhalb der Antriebseinheit angeordnete Bremsscheibe einer Scheibenbremse gekennzeichnet, wobei die Bremsscheibe drehfest an dem Abtriebselement befestigt ist, und daher die Bremsscheibe ebenfalls auf jener gemeinsamen Achse angeordnet ist, auf der auch der Elektromotor, das Getriebe und das Abtriebselement für die Verbindung mit der Gelenkwelle angeordnet sind. Durch diese Anordnung der Bremsscheibe lässt sich auch die Scheibenbremse weit innen, d. h. relativ nahe zu der Fahrzeugmittellinie, anordnen. Dies verbessert nochmals die Konzentration der relativ schwergewichtigen Fahrzeugkomponenten nahe der Fahrzeugmitte.

Der beschriebene elektrische Fahrantrieb lässt sich sowohl zum Antreiben gelenkter Räder einsetzen, welche in der Praxis zumeist die Vorderräder des Fahrzeugs sind, als auch bei ungelenkten Rädern, also üblicherweise den Hinterrädern des Fahrzeugs.

Weitere Vorteile und Einzelheiten werden nachfolgend unter Bezugnahme auf die Zeichnungen erläutert. Darin zeigen:
- Fig. 1: eine Draufsicht auf ein für den Rennsport konzipiertes, zweiachsiges und vierrädriges Fahrzeug, bei dem jedes der vier Räder über einen eigenen Elektromotor mit eigenem Getriebe angetrieben wird;
- Fig. 2: eine vereinfachte Ansicht auf eine Fahrzeugachse eines elektrisch angetriebenen Fahrzeugs mit Blickrichtung in Fahrtrichtung, einschließlich einer Antriebseinheit für das linke und einer separaten Antriebseinheit für das rechte Fahrzeugrad der Fahrzeugachse, und einer Scheibenbremse für jedes Rad, und
- Fig. 3: eine Draufsicht auf den Fahrantrieb nach Fig. 2.

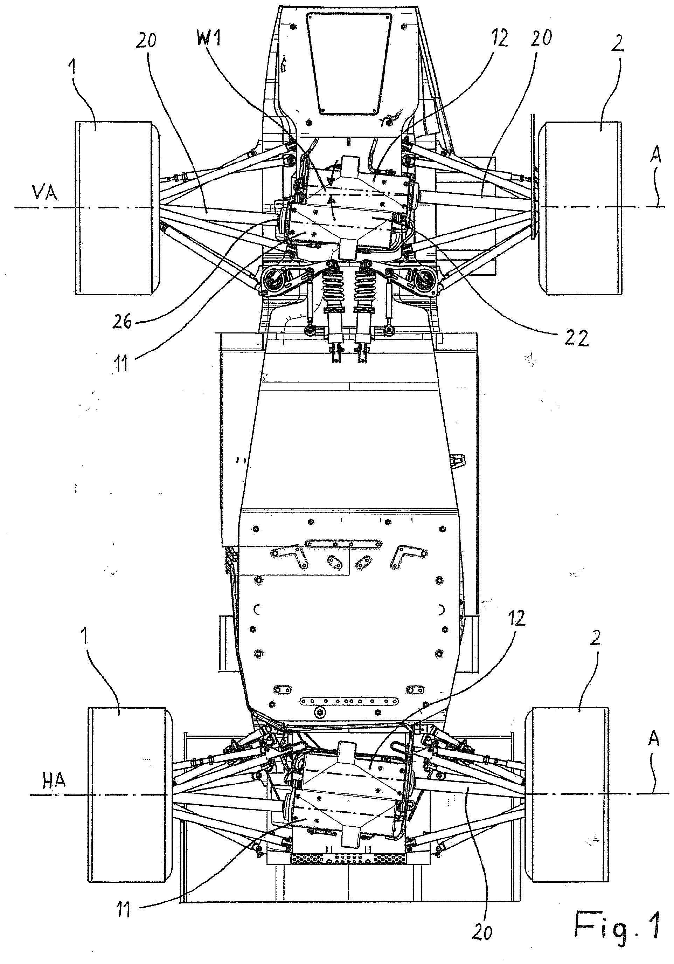

Fig. 1 zeigt ein speziell für den Rennsporteinsatz konzipiertes elektrisches Fahrzeug mit gelenkter Vorderachse VA, sowie nicht gelenkter Hinterachse HA. Das linke und das rechte Fahrzeugrad liegen jeweils auf derselben Achslinie A. Alle Fahrzeugräder 1, 2 beider Fahrzeugachsen VA, HA sind angetrieben. Der Antrieb für jedes Rad erfolgt elektrisch.

Jedem einzelnen Rad 1, 2 ist ein eigener elektrischer Antrieb zugeordnet. Dessen Steuerung übernimmt vorzugsweise eine für alle Räder zentrale, also gemeinsame elektrische Steuereinheit mit Mikroprozessor.

Der Antrieb der in Fahrtrichtung linken Fahrzeugräder 1 erfolgt jeweils über eine erste elektrische Antriebseinheit 11. Diese ist über eine Gelenkwelle 20 mit der Radnabe des betreffenden linken Fahrzeugrads 1 verbunden. Der Antrieb der rechten Fahrzeugräder 2 erfolgt jeweils über eine zweite Antriebseinheit 12. Auch diese ist über eine Gelenkwelle 20 mit der Radnabe des betreffenden rechten Fahrzeugrads 2 verbunden.

Gemäß Fig. 1 sind die beiden Antriebseinheiten 11, 12 derselben Fahrzeugachse VA bzw. HA in Fahrzeuglängsrichtung hintereinander sowie zueinander etwas versetzt angeordnet. Durch diese Anordnung ist es möglich, beide Antriebseinheiten 11, 12 auf der Fahrzeugmittellinie oder zumindest sehr nahe an der Fahrzeugmittellinie anzuordnen, um so eine vor allem für den Rennsport optimale Gewichtsverteilung zentral im Fahrzeug zu erzielen, zumal gerade die Antriebseinheiten 11, 12 relativ schwere Bauteile sind.

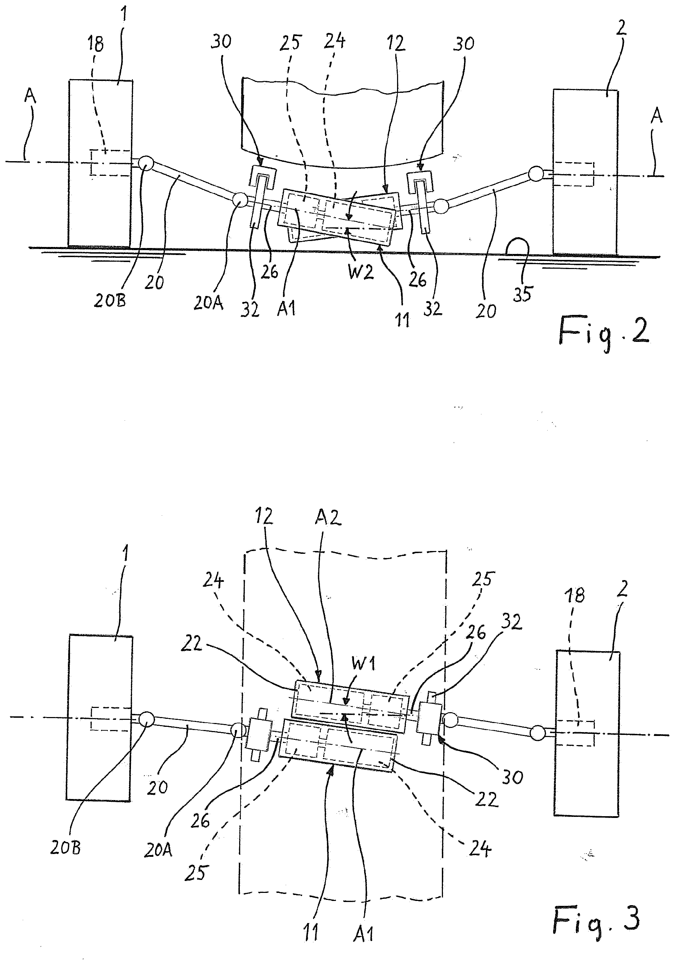

Nachfolgend werden anhand der Figuren 2 und 3 weitere Einzelheiten der Anordnung der für die beiden Fahrzeugräder 1, 2 getrennten Antriebseinheiten wiedergegeben, wobei Fig. 2 den elektrischen Fahrantrieb mit Blickrichtung in Fahrzeuglängsrichtung zeigt, hingegen Fig. 3 eine Draufsicht. Die Figuren 2 und 3 zeigen die Anordnung der Antriebseinheiten im Wesentlichen sowohl für die gelenkte Vorderachse VA, als auch für die nicht gelenkte Hinterachse HA.

Jede Antriebseinheit 11, 12 setzt sich zusammen aus einem Elektromotor 24, einem Encoder, einem Getriebe 25 und einem Abtriebselement 26, welches die Kraft der Antriebseinheit auf die Gelenkwelle 20 überträgt, eventuell über ein zusätzlich dazwischen angeordnetes Kardangelenk 20A oder ein vergleichbares Ausgleichsgelenk. Das Abtriebselement 26 kann z. B. die aus einem Gehäuse 22, welches den Elektromotor 24 und das Getriebe 25 umgibt, herausgeführte Ausgangswelle des Getriebes 25 sein.

Vorzugsweise ist das Gehäuse 22 ein gemeinsames Gehäuse, welches sowohl den Elektromotor mit dem Encoder als auch das Getriebe aufnimmt und eine Öffnung für das Hindurchführen des zu der Gelenkwelle führenden Abtriebselements 26 des Getriebes aufweist, sowie ggf. weitere Öffnungen für Elektrokabel oder Kühlmittelanschlüsse für die Kühlung des Elektromotors.

Das Getriebe 25 kann für eine besonders kompakte Bauweise mit hohem Leistungspotential ein Planetenradgetriebe sein. In diesem Fall sitzt das Abtriebselement 26 entweder auf derselben Zentralwelle wie der Planetenradträger, oder das Sonnenrad des Planetengetriebes, oder das Abtriebselement 26 ist ein aus dem Gehäuse 22 herausgeführter Wellenabschnitt des Planetenradträgers oder des Sonnenrades des Planetenradgetriebes.

Die beiden Gehäuse 22 sind in geeigneter Weise am Fahrzeugchassis befestigt. Diese Befestigung kann starr sein, oder durch elastische Dämpfungselemente gedämpft. Die beiden Gehäuse 22 können miteinander verbunden, oder jeweils für sich an dem Chassis befestigt sein.

Bei jeder Antriebseinheit 11, 12 befinden sich der Elektromotor 24, der Encoder, das Getriebe 25 und das Abtriebselement 26 koaxial auf einer gemeinsamen Achse. Auch die Öffnung im Gehäuse 22 für das Hindurchführen des Abtriebselements 26 ist auf dieser Achse angeordnet. Diese gemeinsame Achse ist für die linke Antriebseinheit 11 die Achse A1, und für die rechte Antriebseinheit 12 die Achse A2. Die Achsen A1, A2 der Antriebseinheiten 11, 12 sind jeweils schräg bezüglich jener gemeinsamen Achslinie A angeordnet, auf der sich die beiden Fahrzeugräder 1, 2 bei Geradeausfahrt drehen.

Das Abtriebselement 26 der jeweiligen Antriebseinheit ist über ein inneres Kardangelenk 20A mit der Gelenkwelle 20, und diese über ein äußeres Kardangelenk 20B mit der Radnabe 18 des jeweiligen Fahrzeugrads 1 bzw. 2 verbunden. Anstelle der Kardangelenke können auch andere, vergleichbare Ausgleichsgelenke verwendet werden.

Ebenfalls auf der gemeinsamen Achse A1, A2 der jeweiligen Antriebseinheit 11, 12 ist eine Bremsscheibe 32 einer Scheibenbremse 30 angeordnet. Die Bremsscheibe 32 ist drehfest an dem Abtriebselement 26 befestigt und sie befindet sich außerhalb des Gehäuses 22 der Antriebseinheit 11 bzw. 12. Durch diese Bauweise lässt sich auch die Scheibenbremse 30 relativ nahe zu der Fahrzeugmittellinie anordnen, was zu einer zusätzlichen Konzentration der ein relativ hohes Gewicht aufweisenden Komponenten nahe der Fahrzeugmittellinie führt.

Gemäß Fig. 1 und Fig. 3 sind die zwei Antriebseinheiten 11, 12 derselben Fahrzeugachse VA bzw. HA in Fahrtrichtung hintereinander angeordnet. Ihre Achsen A1, A2 verlaufen nicht genau in Fahrzeugquerrichtung, sondern unter einem horizontalen Winkel W1 zur Fahrzeugquerrichtung. Dieser Winkel W1 beträgt zwischen 2,5° und 15°, vorzugsweise 2,5° bis 10°. Nur bei Betrachtung in Draufsicht, wie in Fig. 1 und Fig. 3 wiedergegeben, erstrecken sich die Achsen A1, A2 (scheinbar) parallel zueinander.

Zusätzlich sind, wie ebenfalls Fig. 1 und Fig. 3 erkennen lassen, die beiden Antriebseinheiten 11, 12, von oben betrachtet, in Richtung ihrer Achsen A1, A2 versetzt zueinander angeordnet.

Gemäß Fig. 2, also bei Betrachtung in Fahrzeuglängsrichtung, überdecken sich die beiden Antriebseinheiten 11, 12 zu einem großen Teil. Vorzugsweise beträgt diese Überdeckung der Antriebseinheiten 11, 12 mindestens zwei Drittel, um so das Gewicht der Antriebseinheiten nahe der Fahrzeugmittellinie zu konzentrieren.

Gemäß Fig. 2 sind die Achsen A1, A2 für einen tiefen Schwerpunkt, wie er vor allem für den Einsatz im Automobilrennsport wichtig ist, jeweils tiefer als die gemeinsame Achslinie A der Fahrzeugräder 1, 2 angeordnet.

Ferner lässt Fig. 2 erkennen, dass die Achsen A1, A2 der Antriebseinheiten 11, 12 derart gegenüber einer Horizontalebene, hier repräsentiert durch den Fahruntergrund 35, unter zueinander gegenläufigen Winkeln W2 geneigt angeordnet sind, dass jeweils das gelenkwellenseitige Ende der Antriebseinheit 11, 12 das höher liegende Ende ist. Der Neigungswinkel W2 gegenüber der Horizontalebene 35 beträgt jeweils zwischen 2,5° und 20°, vorzugsweise 5° bis 10°.

Durch die Verwendung von Planetengetrieben, Koaxialgetrieben und einer Wickelkopfkühlung werden für die Antriebseinheiten 11, 12 überaus kompakte Baueinheiten erreicht, wodurch die Neigung in der Horizontalebene reduziert wird. Auch werden die Verluste in den Kardangelenken reduziert.

### Bezugszeichenliste

- 1: linkes Fahrzeugrad
- 2: rechtes Fahrzeugrad
- 11: Antriebseinheit für das linke Fahrzeugrad
- 12: Antriebseinheit für das rechte Fahrzeugrad
- 18: Radnabe
- 20: Gelenkwelle
- 20A: inneres Kardanelement
- 20B: äußeres Kardanelement
- 22: Gehäuse
- 24: Elektromotor
- 25: Getriebe
- 26: Abtriebselement
- 30: Scheibenbremse
- 32: Bremsscheibe
- 35: Fahruntergrund, Horizontalebene

- A: gemeinsame Achslinie
- A1: Achse der Antriebseinheit
- A2: Achse der Antriebseinheit
- HA: Hinterachse
- VA: Vorderachse
- W1: Winkel zur Fahrzeugquerrichtung
- W2: Winkel zur Horizontalen

## Patentansprüche

1. Fahrantrieb für ein elektrisch angetriebenes Fahrzeug, mit auf einer gemeinsamen Achslinie (A) angeordneten linken und rechten Fahrzeugrädern (1, 2) und mit für das linke und das rechte Fahrzeugrad getrennten Antriebseinheiten (11, 12), wobei jede Antriebseinheit (11, 12)
- über eine mit mindestens einem Kardanelement (20A, 20B) versehene Gelenkwelle (20) mit der Radnabe (18) des jeweiligen Fahrzeugrads (1, 2) verbunden ist,
- auf einer gemeinsamen Achse (A1, A2) zumindest einen Elektromotor (24) und ein Abtriebselement (26) für die Verbindung mit der Gelenkwelle (20) umfasst,
**dadurch gekennzeichnet, dass** die beiden Antriebseinheiten (11, 12) in Fahrzeuglängsrichtung hintereinander nahe zu der Fahrzeugmittellinie oder auf der Fahrzeugmittellinie angeordnet sind, wobei die Antriebseinheiten (11, 12) einen Vor- und Rückversatz zu der Achslinie der beiden Fahrzeugräder haben und die Achsen der Antriebseinheiten unter einem Winkel (W2) zur Horizontalen und unter einem horizontalen Winkel (W1) zur Fahrzeugquerrichtung geneigt angeordnet sind.

2. Fahrantrieb nach Anspruch 1, **dadurch gekennzeichnet, dass** das Abtriebselement (26) die Ausgangswelle eines Getriebes (25) ist.

3. Fahrantrieb nach Anspruch 1 oder 2, **dadurch gekennzeichnet, dass** sich die beiden Antriebseinheiten (11, 12), in Fahrzeuglängsrichtung betrachtet, zumindest zum Teil überdecken.

4. Fahrantrieb nach Anspruch 3, **dadurch gekennzeichnet, dass** die Überdeckung mindestens zwei Drittel beträgt.

5. Fahrantrieb nach einem der Ansprüche 1 bis 4, **dadurch gekennzeichnet, dass** die Achsen (A1, A2) der Antriebseinheiten (11, 12) jeweils tiefer als die gemeinsame Achslinie (A) angeordnet sind.

6. Fahrantrieb nach einem der Ansprüche 1 bis 5, **dadurch gekennzeichnet, dass** das gelenkwellenseitige Ende der Antriebseinheit (11, 12) jeweils das höherliegende Ende ist.

7. Fahrantrieb nach einem der Ansprüche 1 bis 6, **gekennzeichnet durch** eine außerhalb der Antriebseinheit (11, 12) angeordnete Bremsscheibe (32) einer Scheibenbremse (30), wobei die Bremsscheibe (32) drehfest an dem Abtriebselement (26) befestigt ist.

## Claims

1. Traction drive for an electrically driven vehicle, having left and right vehicle wheels (1, 2) which are arranged on a common axle line (A) and having separate drive units (11, 12) for the left and the right vehicle wheel, wherein each drive unit (11, 12)
- is connected by means of a propellor shaft (20) which is provided with at least one cardan element (20A, 20B) to the wheel hub (18) of the respective vehicle wheel (1, 2),
- on a common axle (A1, A2) comprises at least one electric motor (24) and an output element (26) for connecting to the propellor shaft (20),
**characterised in that** the two drive units (11, 12) are arranged in the longitudinal vehicle direction one behind the other close to the vehicle centre line or on the vehicle centre line, wherein the drive units (11, 12) have a forward and backward offset with respect to the axle line of the two vehicle wheels and the axles of the drive units are arranged inclined at an angle (W2) relative to the horizontal and at a horizontal angle (W1) with respect to the transverse vehicle direction.

2. Traction drive according to claim 1, **characterised in that** the output element (26) is the output shaft of a transmission (25).

3. Traction drive according to claim 1 or 2, **characterised in that** the two drive units (11, 12), when viewed in the longitudinal vehicle direction, at least partially overlap each other.

4. Traction drive according to claim 3, **characterised in that** the overlap amounts to at least two thirds.

5. Traction drive according to any one of claims 1 to 4, **characterised in that** the axles (A1, A2) of the drive units (11, 12) are in each case arranged lower than the common axle line (A).

6. Traction drive according to any one of claims 1 to 5, **characterised in that** the propellor-shaft-side end of the drive unit (11, 12) is in each case the higher end.

7. Traction drive according to any one of claims 1 to 6, **characterised by** a brake disc (32), which is arranged outside the drive unit (11, 12), of a disc brake (30), wherein the brake disc (32) is secured in a rotationally secure manner to the output element (26).

## Revendications

1. Entraînement pour un véhicule électrique, avec des roues de véhicule gauche et droite (1, 2) disposées sur une ligne axiale commune (A) et avec des unités d'entraînements (11, 12) séparées pour la roue droite et la roue gauche du véhicule, dans lequel chaque unité d'entraînement (11, 12)
- est reliée, par l'intermédiaire d'un arbre à cardan (20) muni d'un élément de cardan (20A, 20B), avec le moyeu (18) de la roue (1, 2) correspondante,
- comprend, sur un axe commun (A1, A2), au moins un moteur électrique (24) et un élément d'entraînement (26) pour la liaison avec l'arbre à cardan (20),
**caractérisé en ce que** les deux unités d'entraînement (11, 12) sont disposés l'une derrière l'autre dans la direction longitudinale du véhicule, près de la ligne centrale du véhicule ou sur la ligne centrale du véhicule, dans lequel les unités d'entraînement (11, 12) présentent un décalage avant et arrière par rapport à la ligne axiale des deux roues du véhicule et les axes des unités d'entraînement sont inclinées d'un angle (W2) par rapport à l'horizontale et d'un angle horizontal (W1) par rapport à la direction transversale du véhicule.

2. Entraînement selon la revendication 1, **caractérisé en ce que** l'élément d'entraînement (26) est l'arbre de sortie d'une transmission (25).

3. Entraînement selon la revendication 1 ou 2, **caractérisé en ce que** les deux unités d'entraînement (11, 12) se recouvrent au moins partiellement, vues dans la direction longitudinale du véhicule.

4. Entraînement selon la revendication 3, **caractérisé en ce que** le recouvrement représente au moins les deux tiers.

5. Entraînement selon l'une des revendications 1 à 4, **caractérisé en ce que** les axes (A1, A2) des unités d'entraînement (11, 12) sont disposées respectivement plus bas que la ligne axiale commune (A).

6. Entraînement selon l'une des revendications 1 à 5, **caractérisé en ce que** l'extrémité côté arbre à cardan de l'unité d'entraînement (11, 12) est l'extrémité la plus élevée.

7. Entraînement selon l'une des revendications 1 à 6, **caractérisé par** un disque d frein (32), disposé à l'extérieur de l'unité d'entraînement (11, 12), d'un frein à disque (30), dans lequel le disque de frein (32) est fixé de manière solidaire en rotation à l'élément d'entraînement (26).
